# EUROPEAN PATENT SPECIFICATION

(11) **EP 1 252 048 B1**
(45) Date of publication and mention of the grant of the patent: **13.06.2007**
(21) Application number: 00918330.2
(22) Date of filing: 24.03.2000
(51) Int. Cl.: B60S 1/52

(54) **CONCEALED VEHICULAR WASHER NOZZLE SYSTEM**
VERBORGENES DÜSENSYSTEM FÜR FAHRZEUGSCHEIBENWASCHANLAGE
SYSTEME GICLEUR DE LAVE-GLACE CACHE POUR VEHICULE

(30) Priority: 26.03.1999 US 277459
(43) Date of publication of application: 30.10.2002
(73) Proprietor: Kautex Textron GmbH & Co. KG., 53229 Bonn (DE)
(72) Inventor: RUDEN, Thomas, Farmington Hills, MI 48334-1376 (US); BURT, Stephen, Sandford House, Reading, Berkshire RG4 9 EB (GB)
(74) Representative: polypatent
(86) International application number: PCT/US2000/007800
(87) International publication number: WO 2000/058138

(56) References cited:
- DE-A- 4 429 727
- DE-U- 9 201 119
- FR-A- 2 674 203
- US-A- 4 531 255

## Description

The present invention relates to a vehicular surface washer spray system according to the preamble of claim 1.

All vehicles have windshields or wind screens which periodically require washing or cleaning while under way. There are numerous devices which have been utilized in the past to spray or otherwise discharge washer fluid onto the surface of the windshield working in conjunction with the windshield wipers to wash the surface of the windshield clean. These systems normally provide for a washer fluid reservoir to retain and supply washer fluid under pressure, usually via a pump mechanism, through delivery hoses to a nozzle protruding through the hood or cowl of the automobile, which sprays the washer fluid onto the surface of the windshield. These systems often employ one or more tubes or hoses and couplings leading from the pump to the fluid reservoir and out again to the spray nozzles.

Various other systems utilize a similar arrangement of pump, washer fluid reservoir and plastic tubing, but provide for the nozzle delivery to be arranged in combination with the windshield wiper. In either case, the prior art systems have involved unsightly nozzles and a multitude of separate components, often remote from each other, linked via plastic delivery tubes to a nozzle device which protrudes unsightly from the hood or cowl area of the automobile or is attached to the windshield wiper arm.

For example, in US-A-3,790,083 entitled "Windshield Washer System", there is disclosed an improved nozzle means for spraying washer fluid on the surface of an automobile windshield, the nozzle means being arranged for use in combination with an automobile windshield wiper and washer system, the wiper being the standard reciprocating wiper. In US-A-4,324,363, entitled "Headlamp Washer Assembly Having A Multiported Flow Valve", there is described a headlamp washing assembly including spray nozzles disposed above automotive headlamps. In US-A-4,905,904, entitled "Washing Liquid Jet Device For Automotive Windshield", there is described a washing liquid jet device for automobile window glass, which comprises a first pumping unit for pumping a liquid in a first vessel, a second pumping unit for pumping liquid in a second vessel, and a joining chamber having a first flow path and second flow path. In US-A-4,922,570, entitled "Vehicular Windshield Washer System", there is described a vehicular windshield washer system in combination with a windshield wiper having a wiper arm. In US-A-5,271,120 entitled "Windshield Wiper and Washing Liquid Reservoir Assembly", there is disclosed a windshield wiper assembly comprising a drive mechanism for at least one windshield wiper arm, together with a reservoir for a windshield washing liquid. In US-A-5,799,359 entitled "Windshield Washer and Wiper Assembly", there is described a windshield wiper assembly for cleaning the windshield of an automobile, comprising an elongated housing, a source of windshield washer fluid under pressure, a perforated bladder within the housing, means for washing the windshield mounted through the housing in contact with the bladder, a wiper blade mounted on the housing and means for deflating the bladder.

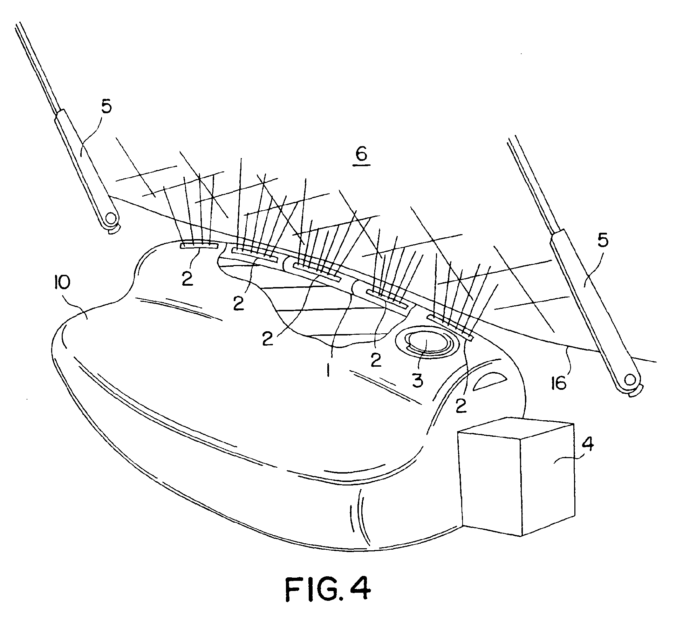

One particular system for cleaning headlights is also shown in US-A-4,285,470, entitled "Self-Contained Headlamp Washer System". That system includes a headlight washer system in which the washer nozzle assembly is contained within the headlight bezel and above the headlight, and having a fluid passageway and washer fluid discharge apertures which allow placement of the washer fluid over the surface of the headlight. In addition, there are a multitude of long, short and offset fluid passageways leading to the several apertures of varying size and slanted inwardly, which discharge washer fluid over the surface of the headlight. In the system shown in Roth the apertures discharge washer fluid in a downward and inward fashion over the limited area of the headlight, and do not operate in conjunction with or as a part of a windshield washer/wiper system. In addition, although Roth might appear to provide a concealed system, at shown therein in Fig. 4, the assembly 21 ultimately protrudes in front of the lens 19 and is not therefore substantially hidden from view.

A vehicular surface washer spray system according to the preamble of claim 1 is for instance disclosed in FR-A-2 674 203. It is a disadvantage of the washer spray system according to FR-A-2 674 203 that the sprayer is provided with protruding spraying nozzles which can hardly be arranged in a concealed fashion. Another vehicular surface washer spray system according to the preamble of claim 1 is known from US-A-4 531 255.

Accordingly, it is an object of this invention to overcome the disadvantages of the prior art and to provide for a less complex windshield washer system, wherein unsightly nozzles protruding through the hood or cowl have been eliminated.

It is also an object of this invention to provide an improved windshield washer system, wherein the tubing and couplings connecting the fluid reservoir to the spray delivery nozzles have been eliminated.

It is still a further object of this invention to provide an improved windshield washer reservoir and system wherein the pump or pressure delivery device is arranged in combination with the fluid reservoir.

This and other objects are achieved by a vehicular surface washer spray system having at least one washer fluid reservoir and a sprayer, including a device for pumping the washer fluid from the reservoir to said sprayer, said sprayer being longitudinally disposed substantially along the periphery of the surface of a vehicle to be sprayed, and substantially hidden from external view, including a plurality of spaced openings longitudinally disposed and selectively positioned in said sprayer and angled toward said surface such that the washer fluid is selectively discharged through said openings in said sprayer onto a selected region of said vehicle surface, this vehicular surface washer spray system being characterised in that the system comprises a resiliently deformable member covering said sprayer, at least in part, to seal the spray system and thereby provide a leak-free operation, the member having a plurality of spaced openings aligned with said plurality of spaced openings in said sprayer.

Further embodiments of the invention are referred to in the dependent claims.

In the drawings, like reference numerals and characters designate like elements and parts throughout the figures, in which:
**FIG.1** is a perspective view of an automobile disclosing an embodiment of the present invention, a sprayer apparatus located at the base of the windshield containing a plurality of spaced holes;
**FIG. 2** is a side view of a sprayer apparatus located at the base of the windshield and windshield wiper;
**FIG. 3A** is a perspective view of the sprayer apparatus with spaced longitudinal slits;
**FIG. 3B** is a perspective view of the sprayer apparatus with spaced cross slits;
**FIG. 4** is a perspective and cutaway view disclosing another embodiment of the present invention, an automobile windshield washer reservoir and spray system;
**FIG. 5A** is a top view of a windshield washer system for an automobile with two windshield wipers located at the base of the windshield, with a plurality of spaced holes;
**FIG. 5B** is a top view of a windshield washer system for an automobile with one windshield wiper located at the base of the windshield, with a plurality of spaced slits;
**FIG. 6** is a top view of an automobile showing the windshield washer system and windshield wipers oscillating in the direction of the arrows;
**FIG. 7** is a side view of a windshield washer system located at the base of the windshield and windshield wiper;
**FIG. 8** is a view similar to **FIG.1** and showing an alternative embodiment of a windshield washer system for an automobile made in accordance with the present invention; and
**FIG. 9** is a view similar to **FIG. 3A**, and showing yet another alternative embodiment to the present invention.

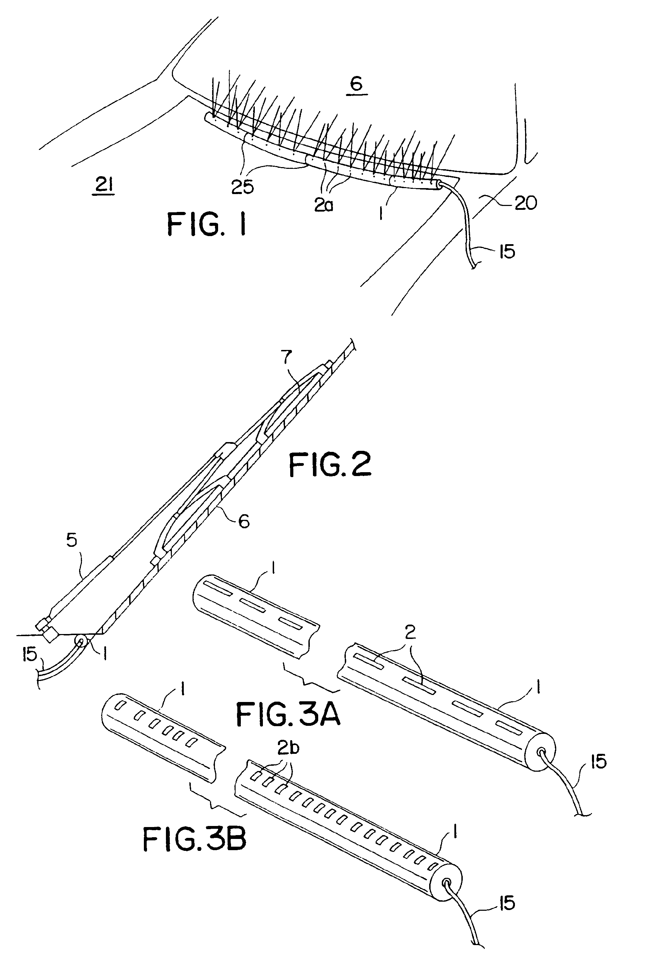

Referring to FIG. 1, there is shown a perspective view of a vehicle describing a first embodiment of the present invention comprising a sprayer apparatus 1 located at the area at the base of the windshield 6 in accordance with the present invention. The sprayer apparatus 1, as shown, can also be described as a bladder-type device, and as shown fitted about the periphery of the automotive windshield. As illustrated, the sprayer is substantially hidden from external view, and a plurality of openings 2a, whose geometry and location are selected to provide an optimum cleaning pattern on the windshield 6.

It is to be noted that although, as shown in FIG. 1, the invention herein is preferably placed into operation to wash and clean a windshield, the present invention, including the alternative preferred embodiments discussed herein, can be applied to other surfaces of the vehicle wherein cleaning is required. These include, without limitation, a vehicle windshield, window, headlamp, tail-light or external mirror and other similar type surfaces wherein safety considerations require the automated cleaning system of the present invention. In addition, although, as illustrated herein, the sprayer system is preferably shown to spray upwardly and onto the vehicle surface, it can be appreciated that the invention herein, as in the case, e.g., of a window or tail-light, may preferably be configured so that the sprayer delivers a cleaning spray from the top of the rear window or tail-light, as the case may be.

With attention again directed to FIG. 1, the sprayer 1 is shown connected to a fluid washer retainer or reservoir by flexible tube or hose 15 connected to a standard pumping device known in the art. In operation, the washer fluid is pumped under pressure from the reservoir though tube 15 to the sprayer 1. The washer fluid is discharged through openings 2a onto the surface of the windshield 6 and the windshield is cleaned by the conventional oscillating action of the wipers across windshield. As shown in FIG. 1, the sprayer 1, can preferably be held in place at the base of the windshield by a conventional bracketing device 25. Alternatively, the sprayer 1 may be located under the cowl of the automobile if the vehicle is so designed, or may be arranged on the underside of the hood 21 or contained within or as a part of the windshield trim.

As can also be appreciated from FIG. 1, the present invention eliminates the unsightly nozzle protruding through the hood or cowl of the automobile yet is of sufficient size to economically deliver under pressure a sufficient amount of washer fluid to the windshield 6. Further, the plurality of openings 2a in sprayer 1 allow for a more efficient washing and cleaning of the windshield by discharging fluid directly onto a greater area of the windshield surface than present systems. In addition, and as illustrated, the openings 2a are selectively spaced so that the washing and cleaning is targeted to those areas with greater intensity of washing and cleaning is desired, such as, e.g., the vision line (area directly in the path of the viewer's eyes) for the driver and front-seat passenger.

Sprayer 1 is also shown in relation to wiper 5 and windshield 6 in FIG. 2 As can be seen, in this alternative preferred embodiment, sprayer 1 is arranged between wiper 5 and the base of the windshield 6, although it can be appreciated that the sprayer 1 may be designed to be at various alternative locations in relation to the wiper mechanism so that it, as previously noted, remains substantially hidden from external view.

FIGS. 3A and 3B are perspective views of enlarged portion or sprayer 1 and flexible hose 15. FIG. 3A discloses a plurality of substantially longitudinal slits 2 in sprayer 1, spaced across the length of sprayer 1 so that the washer fluid may be discharged onto a substantial surface of the windshield, unlike nozzle spray devices which discharge the washer fluid onto more condensed areas of the windshield decreasing the effectiveness of the wiper as it moves across the surface of the windshield and often requiring that the washer system be activated several times in order to effectively clean the windshield. In addition, shown at 2b are square like openings in sprayer 1, which also will modify and accommodate the need to further adjust the spray pattern reaching the windshield surface. Accordingly, those skilled in the art will appreciate that by careful adjustment of the size and shape, or geometry and number of the openings, the spray pattern will be conveniently modified to reach and cover different extents of windshield surface.

Referring to FIG. 4, another preferred embodiment of the invention is disclosed showing an integrated windshield washer reservoir and spray system 10 with an electric pump 4. As illustrated therein, the washer fluid reservoir 10 is again preferably located at the base of the windshield 6 and positioned against the firewall 16 of the vehicle. In this embodiment, sprayer 1 is a part of reservoir 10 forming an integrated unit. With pump 4 preferably arranged alongside reservoir 10, the windshield washer system is in one location within and without the need for the customary flexible tubing that connects the various components of the system.

FIG. 4 also shows a two wiper configuration, with the reservoir and spray device 10 located between the wipers 5, and substantially midway the base of the windshield 6. In operation, the washer fluid retained in reservoir 10 is pumped under pressure by pump 4 into internal sprayer 1 through the slits 2 onto the surface of windshield 6. Washer fluid may be added to the system through removable filler cap 3.

In addition, various plastic materials have been found suitable for the sprayer construction illustrated and shown herein. For example, plastic materials found suitable include materials such as polyethylene and polypropylene, specifically high-density polyethylene which can be conveniently molded into the various sprayer designs herein. Other suitable materials include engineering thermoplastic material resins such as acrylonitrile-butadiene-styrene resins, polyacetal, polycarbonate, thermoplastic polyesters, thermoplastic urethanes, thermoplastic olefins, EPDM, rubber and/or nylons. Of course, the selection of the particularly preferred plastic material is accomplished by selecting that material which is the most economical, is also most conveniently processed, and which provides under-the-hood durability with respect to the under-the-hood vehicular environment.

As can be appreciated, internal sprayer 1 will preferably be of thicker construction than reservoir 10 in order to accommodate the washer fluid pressure when the apparatus is in operation. In this embodiment, the slits 2 of sprayer 1 are angled so as to be discharging washer fluid over a substantial surface of the windshield 6 for greater and more efficient cleaning. In this embodiment, as with other embodiments of the invention, pumping may also sequenced so to match the sweep of the wiper or wipers 5 of the automobile.

As can be seen in FIG. 4, there are no protruding nozzles that must be taken into account for esthetic design purposes. In addition the sprayer system disclosed is less likely to clog or be blocked by snow or ice as is the case with customary nozzles.

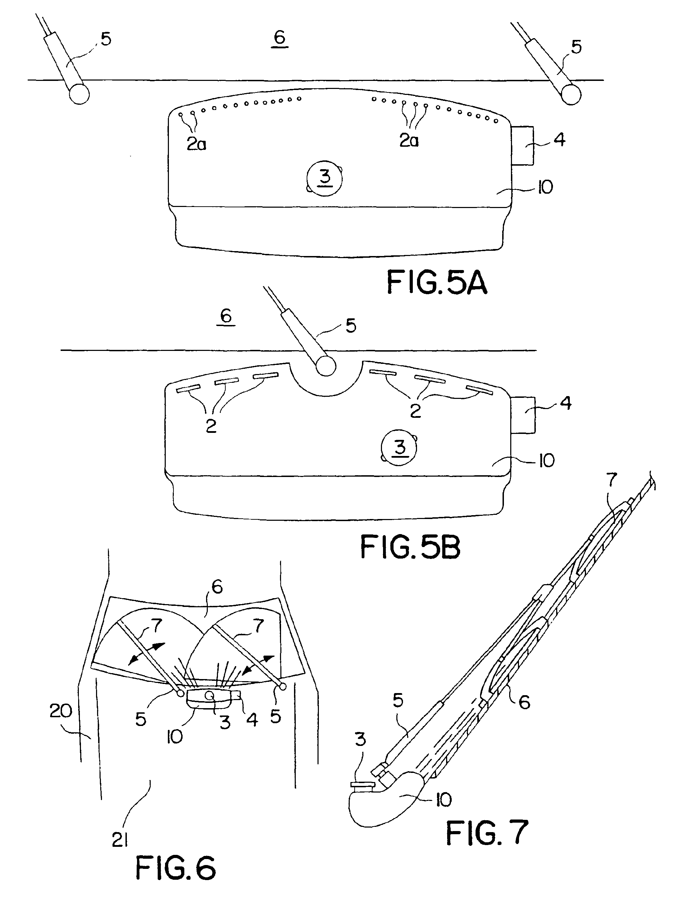

FIGS. 5A and 5B are both top views of two configurations of the integrated windshield washer reservoir and spray system 10. In FIG. 5A and FIG. 6 the washer fluid is discharged through holes 2a and shows two wipers 5. FIG. 5B shows one wiper 5 and the washer fluid is therein discharged through longitudinal slits 2. In addition, as shown in FIG. 5B the integrated washer reservoir and spray system contains what is best described as a cut-out section, or preferably, semi-circular cut-out section for position of the wiper blade 5. Accordingly, in both embodiments illustrated in FIGS. 5A and 5B, the system is designed to deliver washer fluid over a desired and substantial surface of the windshield 6 for maximum cleaning efficiency. In accordance with the present invention, this integrated embodiment is again preferably located at the base of the windshield 6 arranged under the hood 21 or cowl of the automobile 20, so as to be substantially hidden from external view. Finally, FIG. 7 shows reservoir 10 in relation to wiper 5 and windshield 6 in side view pursuant to the present invention.

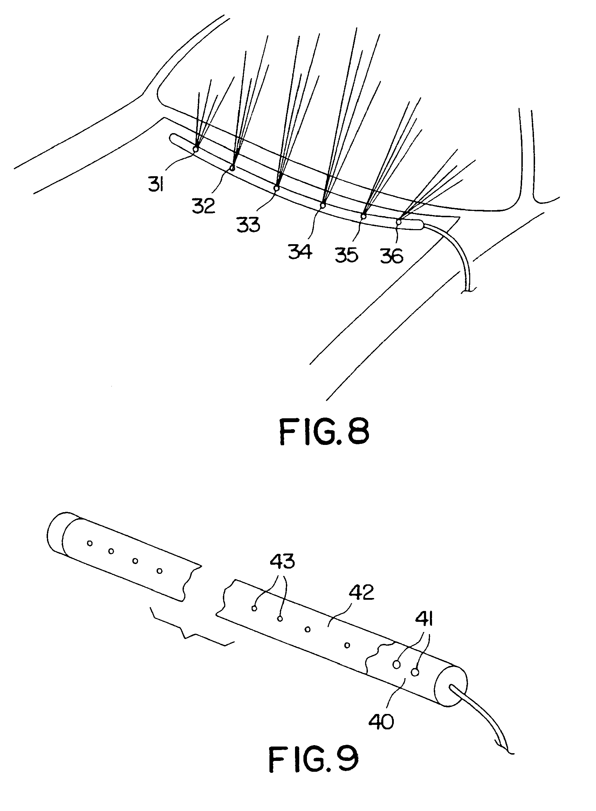

The invention is susceptible to modification. For example, as shown at FIG. 8, the sprayer 1 may comprise a plurality of individual openings or spray jets 31...36 positioned and aimed so as collectively to cover essentially the entire arc wipe area. Thus, ideal distribution of water may be achieved. Also, by employing a plurality of fine jets or sprays, the driver's vision is not momentarily obscured as in the case of a conventional spray.

As seen in FIG. 9, the sprayer 1 comprises a rigid or semi-rigid tubular tube or hose 40. The openings 41 may be formed in the tube 40, for example, by drilling or heat piercing. A resiliently deformable sleeve 42, for example, of silicone or the like, may be fitted over tube 40, with holes or slits 43 aligned with holes 41. Silicone sleeve 42 serves to seal the spray system and thereby provide leak-free operation.

Those skilled in the art will appreciate that still other modifications and variations of the present invention are possible in light of the above teachings. It is, therefore, to be understood that within the scope of the appended claims, the invention may be practiced otherwise than literally described, but fall within the scope therein.

## Claims

1. A vehicular surface washer spray system having at least one washer fluid reservoir and a sprayer (1/10), including a device (4) for pumping the washer fluid from the reservoir to said sprayer, said sprayer being adapted to be longitudinally disposed substantially along the periphery of the surface a vehicle to be sprayed, and substantially hidden from external view when mounted, including a plurality of spaced openings (2/2a) longitudinally disposed and selectively positioned in said sprayer and angled toward said surface such that the washer fluid is selectively discharged through said openings in said sprayer onto a selected region of said vehicle surface, **characterized in that** the system comprises a resiliently deformable member (42) covering said sprayer, at least in part to seal the spray system and thereby provide a leak-free operation, the member having a plurality of spaced openings (31, 32, 33, 34, 35, 36) aligned with said plurality of spaced openings (2/2a) in said sprayer (1110).

2. The system according to claim 1, **characterized by** one or more of the following features:
(a) wherein said sprayer (1) is substantially hidden from view by placement at the base of the vehicle hood;
(b) wherein said surface contains a trim component, and said sprayer (1) is substantially hidden from view by containing said sprayer within said surface trim;
(c) wherein said vehicle contains a cowl, and said sprayer (1) is longitudinally disposed under said cowl of said vehicle;
(d) wherein said openings in said sprayer comprise slits 2, holes 2a, squares 1b, oval shapes, and mixtures thereof; and
(e) wherein said surface of said vehicle is a vehicle windshield, window, headlamp, tail-light or external mirror.

3. The system according to any of the preceding claims, **characterized in that** it is formed as an integrated vehicular surface washer spray system comprising a washer fluid reservoir and a sprayer (10).

4. The system according to claim 3, **characterized by** one or more of the following features:
(a) wherein said surface to be sprayed is a windshield (6), and wherein said integrated surface washer spray system is positioned at the base of said windshield;
(b) wherein said spray system contains a cut-out section for placement of a windshield washer wiper;
(c) wherein said sprayer (10) is manufactured from a plastic material;
(d) wherein said sprayer (10) comprises a shaped plastic molding; and
(e) wherein said spaced openings (2/2a) are formed in said molding by piercing or drilling.

## Patentansprüche

1. Fahrzeugoberflächenwaschsystem mit mindestens einem Waschflüssigkeitsbehälter und einem Sprüher (1/10), umfassend eine Vorrichtung (4) zum Pumpen der Waschflüssigkeit von dem Behälter zu dem Sprüher, wobei der Sprüher so ausgebildet ist, dass der Sprüher im Wesentlichen der Länge nach entlang des Randes von der Oberfläche eines Fahrzeuges, die besprüht werden soll, angeordnet ist, und im Wesentlichen im eingebauten Zustand von außen nicht sichtbar ist, mit einer Vielzahl von zueinander beabstandeten, in Längsrichtung angeordneten und wahlweise in dem Sprüher positionierten und in Richtung der Oberfläche abgewinkelten Öffnungen (2/2a), so dass die Waschflüssigkeit wahlweise durch die Öffnungen in dem Sprüher auf einen ausgewählten Bereich der Fahrzeugoberfläche abgebbar ist, **dadurch gekennzeichnet, dass** das System ein elastisch verformbares Teil (42) umfasst, welches mindestens teilweise den Sprüher bedeckt, um das Sprühsystem abzudichten und **dadurch** einen leckfreien Einsatz zu gewährleisten, wobei das Teil eine Vielzahl von zueinander beabstandeten Öffnungen (31, 32, 33, 34 35, 36) aufweist, die mit der Vielzahl zueinander beabstandeten Öffnungen (2/2a) in dem Sprüher (1/10) fluchten.

2. System nach Anspruch 1, **gekennzeichnet durch** eine oder mehrere der folgenden Eigenschaften:
a) wobei der Sprüher (1) **durch** eine Anordnung an der Basis der Motorhaube im Wesentlichen von außen nicht sichtbar ist;
b) wobei die Oberfläche eine Verkleidung umfasst und der Sprüher (1) von der Verkleidung im Wesentlichen nicht sichtbar aufgenommen wird;
c) wobei das Fahrzeug eine Haube umfasst und der Sprüher (1) von der Länge nach unter der Haube des Fahrzeuges angeordnet ist;
d) wobei die Öffnungen in dem Sprüher Schlitze 2, Löcher 2a, Quadrate 1 b, ovale Formen und eine Mischung daraus umfassen; und
e) wobei die Oberfläche von dem Fahrzeug eine Windschutzscheibe, ein Fenster, ein Frontscheinwerfer, ein Rücklicht oder ein Außenspiegel ist.

3. System nach einem der vorherigen Ansprüche, **dadurch gekennzeichnet, dass** das System als ein integriertes Fahrzeugoberflächenwaschsystem umfassend einen Waschflüssigkeitsbehälter und einen Sprüher (10) ausgebildet ist.

4. System nach Anspruch 3, **gekennzeichnet durch** eine oder mehrere der folgenden Eigenschaften:
a) wobei die Oberfläche, die besprüht wird, eine Windschutzscheibe (6) ist und wobei das integrierte Oberflächenwaschsystem an der Basis der Windschutzscheibe angeordnet ist;
b) wobei das Sprühsystem einen ausgeschnittenen Bereich zum Anbringen eines Scheibenwischers umfasst;
c) wobei der Sprüher (10) aus einem Kunststoff hergestellt ist;
d) wobei der Sprüher (10) einen Kunststoffformling umfasst; und
e) wobei die verteilt angeordneten Öffnungen (2/2a) **durch** Stechen oder Bohren in den Formling geformt werden.

## Revendications

1. Système pulvérisateur de lave-glace pour surface de véhicule ayant au moins un réservoir de liquide de lave-glace et un pulvérisateur (1/10), comprenant un dispositif (4) pour pomper le liquide de lave-glace du réservoir vers ledit pulvérisateur, ledit pulvérisateur étant adaptable pour être longitudinalement disposé sensiblement sur la périphérie de la surface d'un véhicule à pulvériser et sensiblement caché lorsqu'il est monté, comprenant une pluralité d'ouvertures écartées (2/2a) disposées longitudinalement et positionnées sélectivement dans ledit pulvérisateur et formant un angle vers ladite surface, de telle sorte que le liquide de lave-glace soit sélectivement déchargé par lesdites ouvertures dans ledit pulvérisateur sur une région choisie de ladite surface de véhicule, **caractérisé en ce que** le système comprend un élément (42) déformable élastiquement recouvrant ledit pulvérisateur, au moins partiellement pour fermer le système pulvérisateur et pour ainsi assurer un fonctionnement sans fuite, l'élément ayant une pluralité d'ouvertures écartées (31, 32, 33, 34, 35, 36) alignées avec ladite pluralité d'ouvertures écartées (2/2a) dans ledit pulvérisateur (1/10).

2. Système selon la revendication 1, **caractérisé par** une ou plusieurs des caractéristiques suivantes :
(a) dans lequel ledit pulvérisateur (1) est caché du fait de son placement à la base du capot du véhicule ;
(b) dans lequel ladite surface contient un composant d'habillage et ledit pulvérisateur (1) est sensiblement caché en contenant ledit pulvérisateur à l'intérieur de l'habillage de la surface ;
(c) dans lequel ledit véhicule contient un déflecteur et ledit pulvérisateur (1) est disposé longitudinalement sous ledit déflecteur dudit véhicule ;
(d) dans lequel lesdites ouvertures dans ledit pulvérisateur comprennent des fentes 2, des trous 2a, des carrés 1b, des formes ovales et des mélanges de ceux-ci ; et
(e) dans lequel ladite surface dudit véhicule est un pare-brise, une vitre, un phare, un feu arrière ou un rétroviseur extérieur de véhicule.

3. Système selon l'une quelconque des revendications précédentes, **caractérisé en ce qu'**il est formé en tant que système pulvérisateur intégré de lave-glace pour surface de véhicule comprenant un réservoir de liquide de lave-glace et un pulvérisateur (10).

4. Système selon la revendication 3, **caractérisé par** une ou plusieurs des caractéristiques suivantes:
(a) dans lequel ladite surface à pulvériser est un pare-brise (6) et dans lequel ledit système pulvérisateur intégré pour lave-glace de surface est positionné à la base dudit pare-brise ;
(b) dans lequel ledit système pulvérisateur contient une section découpée pour placer un système d'essuie-glace et de lave-glace pour pare-brise ;
(c) dans lequel ledit pulvérisateur (10) est fabriqué à partir d'une matière plastique ;
(d) dans lequel ledit pulvérisateur (10) comprend un moulage en plastique ; et
(e) dans lequel lesdites ouvertures écartées (2/2a) sont formées dans ledit moulage par perçage ou par forage.
